# EUROPEAN PATENT APPLICATION

(11) **EP 0 665 141 A1**
(43) Date of publication of application: **02.08.1995**
(21) Application number: 94830244.3
(22) Date of filing: 24.05.1994
(51) Int. Cl.: B60R 22/00, B60R 22/18

(54) **Front seat arrangement for light trucks, vans or the like**

(30) Priority: 27.01.1994 IT TO940039
(71) Applicant: LEAR SEATING ITALIA S.p.A., I-10128 Torino (IT)
(72) Inventor: Sbaragli, Silvano, I-10048 Vinovo (Torino) (IT)
(74) Representative: Notaro, Giancarlo

(57) **Abstract**

In a light truck, van or the like, the central front seat is provided with a safety belt including a diagonal portion (5) which is passed through a support (10) fixed to a pillar (11) which is rigidly connected to the motor-vehicle floor. Preferably the pillar (11) also supports the winder device (9).

## Description

The present invention relates to a front seat arrangement for light trucks, vans or the like, of the type comprising a row of three front seats each provided with a respective safety belt.

In vehicles of this kind, the driving seat and the front seat located on the side opposite to that of the driving seat are each provided with a safety belt having both an abdominal portion and a thorax portion, a belt passage support being fixed on the side pillar of the vehicle structure. The central front seat is provided instead with a safety belt having only an abdominal portion.

In order to improve safety of the passenger seated on the front central seat, the present invention provides an arrangement of the above indicated type, characterized in that said central seat is provided with a safety belt including both a lower abdominal portion and a thorax diagonal portion which is passed at the top through a support fixed to a pillar which is rigidly connected to the vehicle floor.

In a preferred embodiment, the winder device of the safety belt of the central seat is also mounted on said pillar, adjacent to the lower end thereof.

The above mentioned pillar is provided at a position adjacent to the backrests of the driving seat and the central front seat, so that it does not reduce the available space within the passenger compartment of the motor-vehicle. This pillar may extend from the floor up to the roof of the driving cab, or can be stopped at a height substantially corresponding to that of the front seats.

The invention will be now described with reference to the annexed drawings, given purely by way of non limiting example, wherein:
figure **1** is a perspective view of a first embodiment of the seat arrangement according to the invention,
figure **2** is a side view of the arrangement of figure 1, and
figure **3** shows a variant of figure 1.

With reference to the drawings, numerals 1, 2 respectively designate the central front seat and the front seat opposite to the driving seat of a light truck or van. In the drawings, the driving seat is not illustrated, in order to show the structure forming the subject of the invention more clearly.

In the case of the illustrated example, the two seats 1, 2 have cushions 1a, 2a and backrests 1b, 2b supported by a single support frame 12 fixed to the cabin floor of the vehicle. The side seat 2 is provided with a conventional safety belt (not illustrated) including a lower abdominal portion and a diagonal thorax portion which are connected to the side of the structure of the vehicle in the conventional way. The arrangement of the safety belt of seat 2 is not illustrated since it is of conventional type and does not fall, taken alone, within the scope of the present invention. The deletion of such details from the drawings also makes the structure forming the subject of the invention easier to understand.

Contrary to the conventional art, the central seat 1 is provided with a safety belt 3 including not only a horizontal portion 4, but also a diagonal portion 5. The safety belt 3 has a connecting tab which is for cooperation with a quick-fit buckle 6 provided in the space 13 intermediate between cushions 1a, 2a (similarly to a buckle 7 associated with the safety belt of seat 2). Belt 3 has one end rigidly connected to an anchoring bracket 8 and the other end connected to a winder device 9 and is passed through a support 10 adjacent to the shoulder of the user.

According to the invention, the support 10, and preferably also the winder device 9 and the buckle 8, are supported by a pillar structure 11 which is rigidly anchored to the cabin floor.

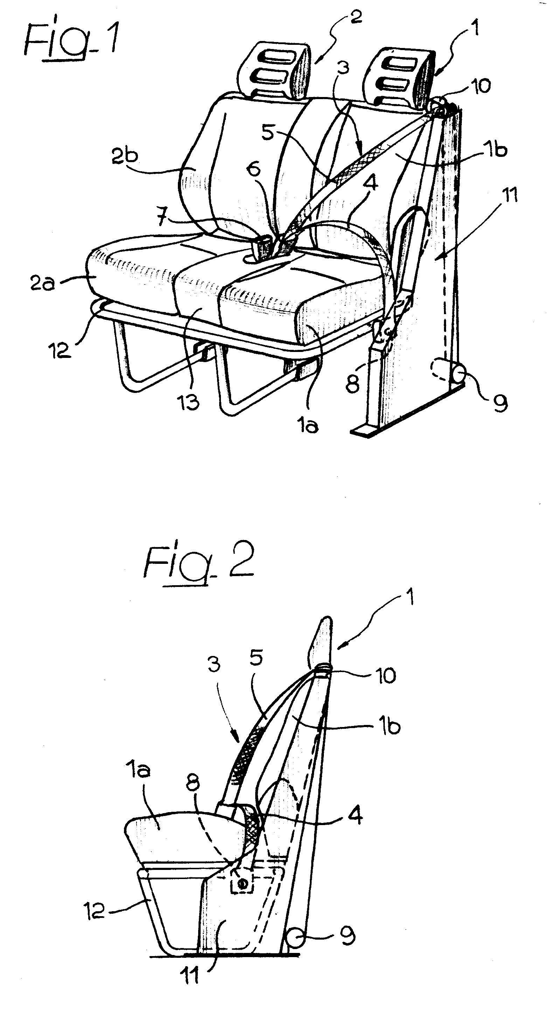

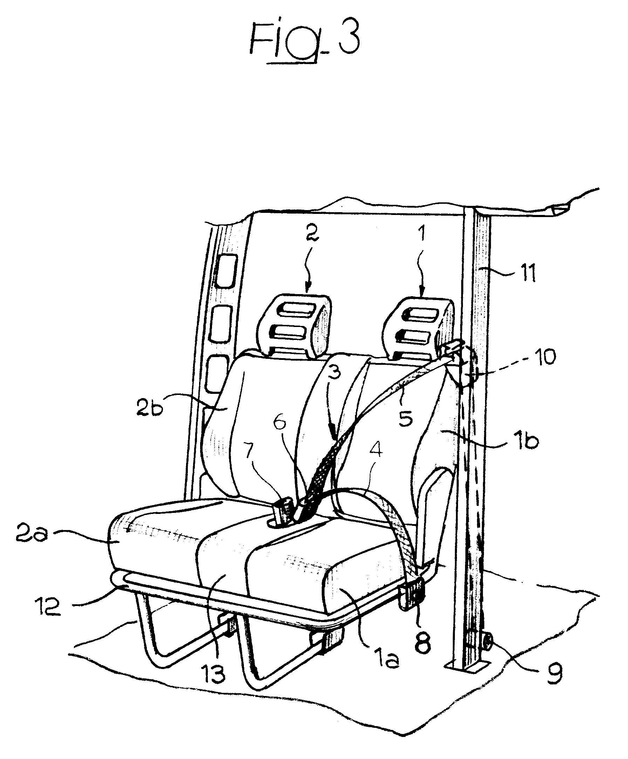

Figure 1 shows an embodiment in which pillar 11 stops at a height substantially corresponding to that of the backrest of seat 1 and is arranged substantially in the space between the backrest of seat 1 and the adjacent backrest (not shown) of the driving seat. Figure 3 shows a second embodiment in which pillar 11 extends from the cabin floor up to the roof and is rigidly connected to the latter, whereas buckle 8 is fixed to frame 12.

The above described arrangement substantially improves the safety of the passenger seated on the front central seat of the vehicle, with a relatively simple and cheap structure.

Naturally, while the principle of the invention remains the same, the details of construction and the embodiments may widely vary with respect to what has been described and illustrated purely by way of example, without departing from the scope of the present invention.

## Claims

1. Front seat arrangement for light trucks, vans or the like, comprising a row of front seats each provided with a respective safety belt,
characterized in that a central front seat (1) is provided with a safety belt (3) including both a lower abdominal portion (4), and a diagonal thorax portion (5) which is passed at the top within a support (10) which is fixed to a pillar (11) which is rigidly connected to the motor-vehicle floor.

2. Arrangement according to claim 1, characterized in that the safety belt (3) of the front central seat (1) has one end anchored to a bracket (8) and the opposite end connected to a winder device (9), said winder device (9) being also fixed to said pillar (11).

3. Arrangement according to claim 2, characterized in that the pillar (11) extends from the motor-vehicle floor up the roof, and is rigidly connected to the latter.

4. Arrangement according to claim 1, characterized in that the pillar (11) extends from the motor-vehicle floor up to a height corresponding to that of the upper edge of the backrest of the central front seat (1).
The whole substantially as described and illustrated and for the specified objects.
